Europäisches Patentamt

European Patent Office

Office européen des brevets

(19)

(11) Publication number: **0 059 287**

**A1**

(12)

# EUROPEAN PATENT APPLICATION

(21) Application number: **81304770.1**

(22) Date of filing: **13.10.81**

(51) Int. Cl.³: **B 31 B 1/90**

(30) Priority: **03.03.81 GB 8106671**

(43) Date of publication of application:
**08.09.82 Bulletin 82/36**

(84) Designated Contracting States:
**AT BE CH DE FR GB IT LI LU NL SE**

(71) Applicant: **UNILEVER PLC**
**Unilever House Blackfriars P O Box 68**
**London EC4P 4BQ(GB)**

(84) Designated Contracting States:
**GB**

(71) Applicant: **UNILEVER NV**
**Burgemeester s'Jacobplein 1**
**NL-3000 DK Rotterdam(NL)**

(84) Designated Contracting States:
**BE CH DE FR IT LI LU NL SE AT**

(72) Inventor: **Wilson, Frederick William**
**Hope Cottage 66 Pickford Road**
**Markyate St. Albans Hertfordshire(GB)**

(74) Representative: **Stancliffe, Terence Christopher et al,**
**Unilever PLC, Patent Division PO Box 31 Salisbury**
**Square House Salisbury Square**
**London EC4P 4AN(GB)**

(54) Process and apparatus for fabrication of packages and containers.

(57) Process for producing thermoplastic sleeve (2) pendent from the wall (1) of a packaging sheet or container of thermoplastic sheet material, by forming a flange (3), e.g. from the sheet and heat-welding the sleeve to the flange. Apparatus for carrying out the process comprises a tapered mandrel (3) for supporting the sleeve (2) and forming the flange (5) mounted on a locating bed (4) for supporting the sheet, with a heat-welding coil (6) located around the mandrel close to and slightly spaced from the locating bed.

# PROCESS AND APPARATUS FOR
# FABRICATION OF PACKAGES AND CONTAINERS

This invention relates to a process and apparatus for the fabrication of packages and containers comprising heat-sealable or heat-weldable material, e.g. thermoplastic polymers such as polyethylene and polypropylene, polyamide, polyvinyl chloride, and laminates of these materials.

Heat-sealing techniques are known in themselves and are often applied for example to polyethylene film. Pincer type heat sealers are known and available, and depicted for example in manufacturers' publications e.g. those of Joisten and Kettenbaum GmbH. These are used for example to make strip-line weld seams in film sheet during the manufacture of bags. Sonic sealing is also possible, e.g. using machines made by Reece Corporation, Massachusetts, U.S.A.

This invention provides a method of producing heat-welded thermoplastic sleeves, e.g. tubes, pendent from a bag or sheet wall of thermoplastic material, which comprises making a hole in a bag or sheet wall of thermoplastic material, forming a flange on one of the components to be joined, e.g. on the surround to the hole and/or on the end of the sleeve to be welded thereto, e.g. by means of a tapered mandrel, and heat-welding the sleeve to the flange. When for example 125-250 micron thick LDPE

.(low-density polyethylene) is used, the flange formation can be carried out e.g. at about 60°-65°, and the heat welding can be carried out in a few seconds at about 110°C or more, e.g. 120°-130°C, e.g. about 125°C.  Either direct or ultrasonic heating can be used, for example.  The flange can for example be made either by plastic deformation on heating of the material of the sheet or sleeve, or by sealing a flange of additional material to it.

The sleeve can for example be a length of thermoplastic tube of the same or different thickness compared with the thickness of the sheet.   The sleeve can be double or single or multiple ply.   It can be convenient to fit the sleeve closely to the mandrel before forming the surround of the hole in the sheet into the flange upon the mandrel.   This leaves the flange outside the tube.   The pendent sleeve can if desired be everted after welding. If a double or multiple layer sleeve is used, the additional tubes can be welded at the same time as the welding of the first tube, or separately afterwards.

This fixing method produces an annular weld or joint between the wall flange and pendent sleeve.   If desired, further annular weld seam(s) or joint(s) can be applied, spaced from the initial weld seam.   Where more than one sleeve layer is present, such an additional seam can serve to fix the layers together.

The shape of the joint between the pendent sleeve and sheet wall can be chosen at will and according to the shape of the mandrels and locating beds used for locating the tubes and sheets in the welding operations.  A rather sharp right-angle bend of the wall material can be used but it can be preferable to flare the wall material outwards more gradually to form the flange, or to flare the tube material outward more gradually to meet the wall.

It can be desirable to reinforce the wall in the region of attachment of the pendent sleeve.   An apertured patch of reinforcing material, e.g. thermoplastic polymer or any other suitable material, can be applied by adhesive (e.g. adhesive tape) or heat-sealing.  The patch can if desired, and where it is sealingly welded, incorporate a flange to which the pendent sleeve is attached.  In a suitable case this flange can supplement or replace the flange formed from the bag or container sheet wall.

It is understood that heat-welding or sealing can (a) involve heat-sealing using only the material of which the sleeves and sheets to be welded are composed, as well as (b) heat-welding involving the addition of thermoplastic or heat-settable weld or adhesive material of like or unlike composition to that of the sleeve and sheet, provided that good sealing is achievable.

An example of heat-welding attachment of a thermoplastic sleeve to a thermoplastic sheet is illustrated by the accompanying sectional diagrammatic drawing and described as follows.

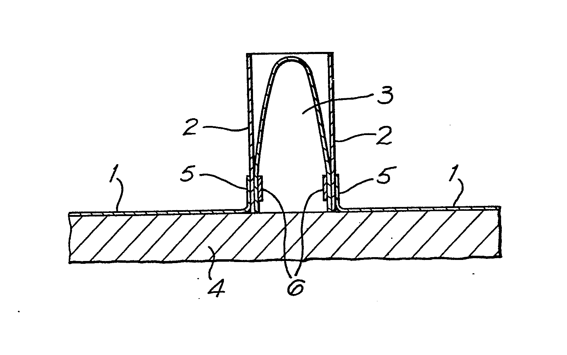

A sheet 1 of thermoplastic material, shown in section in the drawing, and optionally forming part of a bag or container or later to be made up into such, is punctured to give a hole somewhat smaller than a tube sleeve to be welded:  e.g. a hole of about 0.38" diameter where the tube is to have about 1.25" diameter, or a hole of about 6.5" diameter where the tube is to have about 8" diameter, to provide a suitable flange width for welding.  A length of thermoplastic tube 2 to be welded is forced down as a close fit on a complementary tapered mandrel 3, also both shown in section in the drawing.  The taper need not be uniform so long as it allows close fitting of the tube in the region to be welded.  If need be the mandrel 3 and tube 2 can be warmed enough to relax the tube on the mandrel (e.g. about 40°-45°C up to about 60°-65°C).  The mandrel 3 is located on, if not already present with or fixed to, a flat bed or board 4 to support the sheeting or film wall 1 to which the tube is to be welded.  The punctured sheeting is forced over the mandrel and tubing.  The surround to the hole is flared out to form a flange 5, possibly with the application of heat. The remainder of the sheet is supported by the bed 4 on which the mandrel 3 is positioned. Welding heat is then applied with both tube and sheet fully supported. This can be applied through an electrical heating coil 6 at the welding location wound around or embedded in the mandrel 3. It is important that air gaps at the welding location between tubing and mandrel are avoided, i.e. that the mandrel curvature is substantially free from irregularity. If desired, the flanges and tube fitting can be performed in separate operations, before the parts to be welded are mated on the mandrel.

Where LDPE is used, the heat-welding conditions can be as mentioned above.

Where polypropylene film is used, hotter temperatures may be needed for heat-welding, e.g. about 160°C or more, up to about 180°C. Polyamide/nylon may require about 180°C or more. When these materials are used the welding conditions may be found somewhat critical. It is not easy to specify optimum temperature conditions as these vary with shape, thickness, etc., but instead we prefer to arrive at optimum welding conditions empirically for each type of job by fine control of the heating time for which heat up to the specified temperature range is applied, typically for a few seconds, e.g. 1-10 seconds. Insufficient heat can be detected by absence of good welds, excess heat by brittleness, cracks and blowouts.

Quite large containers of 250 micron film can have inlet and outlet film tubes welded to them in the above-described manner.

For extra strength, the container walls can be made double- or multi-ply in the region of the sleeves in any of the ways described above, and more than one sleeving layer can be welded on. To prevent tearing where the sleeve is sealed to a rigid inlet or outlet connector, cushioning material can be provided above and/or below and/or around a clip, or other fixing device, connecting the sleeving to the inlet or outlet connector.

The mandrels and locating beds used for heat sealing in this invention can be of any desired form provided the objects indicated above are met: conveniently any form of bed or base to support a film sheet can have a solid or hollow mandrel projecting from it with some taper to allow close fitting of a complementary tube to be welded. An annular heating device, e.g. coil to receive heating impulses from a known impulse sender for a welding machine, can be located around the mandrel spaced a little from the bed or base. Additional heating means can be arranged in the bed or mandrel for making supplementary weld seams or relaxing the material to be welded at lower temperature.

Other modifications and variations to the apparatus and process will be apparent to the skilled reader from this description and the appended claims.

The process and apparatus of the invention provide the advantages of simplicity in use and a simple, portable welding apparatus.

CLAIMS:

1.    A process for producing a thermoplastic sleeve pendent
from an apertured wall of a packaging sheet or container of
thermoplastic sheet material, by joining a sleeve to an
aperture in the wall, characterised by forming a flange
from one of the components to be joined (the sheet wall or
the sleeve) and heat-welding the other component (sleeve or
sheet wall) to the flange.

2.    A process according to claim 1, characterised in that
the flange is formed by means of a tapered mandrel of
corresponding size.

3.    A process according to claim 1 or 2, characterised by
heat-welding the sleeve to the flange by means of a heated
mandrel of corresponding size.

4.    A process according to claim 3, characterised in that
during the heat-welding operation the sleeve is supported
by the mandrel and the sheet or wall to which it is being
welded is supported on a locating bed or base.

5.    A process according to claim 4, characterised in that
the sleeve and the sheet wall are supported during the
heat-welding operation on a bed or base with the solid or
hollow tapered mandrel mounted on it and projecting from
it.

6.    A process according to claims 3, 4 or 5, characterised
by heat-welding using an electrically heated mandrel
energised for a few seconds sufficient to effect the
heat-weld.

9AE10E

7. A process according to any of claims 1-6, characterised in that the material to be welded is sheet polyethylene, polypropylene or polyamide.

8. Apparatus for carrying out heat-welding of sleeves to sheets, characterised by a bed or base for supporting a sheet to be welded, and projecting from the bed or base a tapered mandrel for supporting the sleeve to be welded.

0059287
Application number

European Patent
Office

EUROPEAN SEARCH REPORT

EP 81 30 4770

| Category | Citation of document with indication, where appropriate, of relevant passages | Relevant to claim |
|---|---|---|
| X | US - A - 3 887 323 (BRATTEN)<br><br>* figures * | 1,2,4 5,8 |
| X | GB - A - 1 511 729 (ZEPHYR)<br><br>* figures * | 1,2,4 |
| X | DE - A - 1 704 397 (PARKEDAVIS)<br><br>* figure 8 * | 1,2,4 5,7,8 |
| X | FR - A - 2 318 016 (VERSTEEGE)<br><br>* figures 7,8 *<br><br>& GB - A - 1 516 540 | 1,2,4 5 |
| X | US - A - 3 322 590 (CLARK)<br><br>* figures * | 1,4,5 |
| X | US - A - 2 746 774 (NIELSEN)<br><br>* figures; column 1, lines 40-41 * | 1,7 |
|  | US - A - 3 389 643 (LEMCKE)<br><br>* figure 5 *<br>./. | 1,4,5 |

**DOCUMENTS CONSIDERED TO BE RELEVANT**

**CLASSIFICATION OF THE APPLICATION (Int. Cl.³)**

B 31 B 1/90

**TECHNICAL FIELDS SEARCHED (Int. Cl.³)**

B 31 B
B 29 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-11-1981 | CORDENIER |

EPO Form 1503.1  06.78

European Patent
Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | <u>DE - C - 900 268</u> (WITZENMAN)<br><br>* figure 2; page 2, line 123 *<br><br>-- | 3 |
| | <u>US - A - 3 355 340</u> (CALVERT)<br><br>* figure; column 3, line 35 *<br><br>-- | 6 |
| | <u>CH - A - 455 632</u> (EXPRESS DAIRY)<br><br>* figures; column 11 and 12 *<br><br>--------- | 1 |

CLASSIFICATION OF THE APPLICATION (Int. Cl.³)

TECHNICAL FIELDS SEARCHED (Int. Cl.³)

EPO Form 1503.2   06.78